# EUROPEAN PATENT SPECIFICATION

(11) **EP 1 114 936 B1**
(45) Date of publication and mention of the grant of the patent: **09.06.2004**
(21) Application number: 00310819.8
(22) Date of filing: 06.12.2000
(51) Int. Cl.: F16B 19/10

(54) **Closed-end type blind rivet**
Blindniet
Rivet aveugle

(30) Priority: 08.12.1999 GB 9928976
(43) Date of publication of application: 11.07.2001
(73) Proprietor: Newfrey LLC, Newark, Delaware 19711 (US)
(72) Inventor: Jennings, Gary, Birmingham B43 7RE (GB); Probert, Peter Christopher, Birmingham B74 3NU (GB)
(74) Representative: Haar, Lucas H., Dipl.-Ing.

(56) References cited:
- EP-A- 0 277 759
- EP-A- 0 677 666
- EP-A- 0 730 100
- EP-A- 0 766 012
- US-A- 5 496 140

## Description

This invention relates to a a closed-end type blind rivet.

Closed-end type blind rivets are well-known and generally comprise a mandrel having a pulling stem with a radially enlarged head attached at one end and a tubular shell having a generally cylindrical shaped shank having a radial flange formed at one end of the shank for engaging a face of the workpiece. An axial bore is formed through the flange and passes a substantial way into the shank. The radially enlarged head of the mandrel is located within the shank towards the end remote from the flange adjacent an end of the bore. The enlarged head has a circumference which is greater than that of the bore. The pulling stem extends from the enlarged head through the length of the bore and extends away from the body of the rivet. A breakneck is formed on part of the stem and which is located within the shank. When the rivet is set, the flange is held stationary whilst the exposed part of the pulling stem is pulled axially away from the flange, the enlarged head being forced to pass through at least part of the bore. Because the diameter of the pulling head is larger than the bore, it causes the shank to deform into an annular bulge or fold which projects radially outwardly. The radial outward bulge forms a blind head and engages the opposite side to workpiece to that of the flange. Once the pulling force on the stem exceeds a predetermined amount, the breakneck breaks leaving the rivet set. The rest of the stem can then be removed and discarded.

One closed-end type blind rivet disclosed in EP-A-0 730 100 comprises a shank having circumferential grooves spaced at intervals along the length of the shank. When such rivets are set, the grooves collapse in an axial direction, the sections of the rivet body between the grooves expanding radially to form the characteristic "cottage loaf" setting. The depth of the grooves is critical in certain extreme conditions for example when the rivet is set in an oversized hole whilst needing to provide an air and water tight fixing. This is particularly difficult when the rivet bodies are made of intractable material such as stainless steel. If the grooves are to deep the rivet body will crack and if they are too shallow, the grooves will not provide sufficient resistance to prevent the mandrel head from pulling into or even through the rivet body.

This can result in two problems. Firstly, during setting in softer materials, the grooves are required to be deeper to prevent the mandrel head from pulling through the rivet body. However, this can cause fracture of the rivet body. If the grooves are not at an optimum depth, the mandrel pulls through the rivet body causing radial expansion of the rivet body between the grooves which can result in the splitting of the workpiece material if the expansion takes place within the bore formed in the workpiece, in which the rivet is located.

Secondly, if the grooves are less than optimum, during the setting of a rivet, the mandrel head can pull through the rivet body since there is insufficient resistance from the soft workpiece materials to help provide resistance to the head of the mandrel pulling into the rivet body. This can result in part of the stem attached to the head of the mandrel protruding from the flange giving a potentially hazardous condition.

US 5496140 discloses a blind rivet having a rivet shell and a drawing mandrel provided with a mandrel shaft, mandrel head and region of reduced cross-section defining a break point of the mandrel shaft. The rivet shell has at least one attenuation groove formed by four recesses distributed equally around the circumference of the rivet shell. Each of the recesses includes a bottom flat wall which runs along a secant of the cylindrical circumference of the rivet shell.

EP766012 discloses a rivet having a mandrel provided with a mandrel head and breakneck portion, and a rivet sleeve extruded onto the mandrel and provided with continuous grooves by means of rolling.

EP677666 discloses a blind rivet having a tubular shell and an elongate stem having a stem head joined to a stem tail by means of a breakneck. The external surface of the shank of the tubular shell has two continuous zones of reduced diameter separated from zones of full diameter by transition zones.

EP277759 discloses a rivet having a stem and a tubular shell. The stem has an enlarged head connected to the stem by means of a breakneck, and the sleeve is provided with three continuous circumferential grooves.

Accordingly, in one aspect of the invention, there is provided a blind rivet comprising:
a body having a generally cylindrical shank, a radial flange formed at one end of the shank, a bore which extends axially through the flange and through a substantial part of the length of the shank and radial impressions formed around the circumference of the shank at predetermined distances from the flange, wherein the position of the radial impressions nearest the flange determines the thickness of the workpiece which can be fastened using the rivet; and
a mandrel comprising a mandrel head located adjacent an end of the bore remote from the flange, a stem attached to the mandrel head which passes through the length of the bore and extends beyond the flange and which comprises a breakneck located on the stem;
characterised in that at least two series of independent radial impressions are formed around the circumference of the shank by a crimping operation in such a manner that angled flanks are formed on each side of said impressions and that the shank bulges outwardly between the series of radial impressions to form a gap between the stem and the wall of the bore in the shank between the series of radial impressions.

Though there can be any number of radial impressions, ideally there are four radial impressions in each series.

Though the body of the rivet can be made of any different types of material, ideally it is made from stainless steel.

According to a second aspect of the present invention there is provided a method of manufacturing a blind rivet comprising the steps of mounting the rivet body onto the mandrel so that the mandrel head is located within the shank and the stem extends from the head through the bore and flange and away from the body of the rivet, and then crimping at least two series of individual radial impressions onto the outer circumference of the shank at pre-set distances from the flange in such a manner that angled flanks are formed on each side of said impressions and that the shank bulges outwardly between the series of radial impressions to form a gap between the stem and the wall of the bore in the shank between the series of radial impressions.

According to a third aspect of the present invention, there is provided a method of setting a blind rivet in a workpiece comprising the step of selecting a rivet such that the series of radial impressions nearest the flange are located at a distance from the flange which is the same as the thickness of the workpiece so that when the rivet is located within the workpiece, the series of radial impressions nearest the flange coincides with the surface of the blind side of the workpiece.

An embodiment of the invention will now be described with reference to the following drawings ofwhich:-
Figure 1 shows a side view of a rivet according to the present invention;
Figure 2 shows a vertical cross-section of the rivet indicated by X-X in Figure 1;
Figure 3 shows a vertical cross-section of the rivet at the point indicated by Z-Z in Figure 1; and
Figure 4 shows the rivet after it has been set.

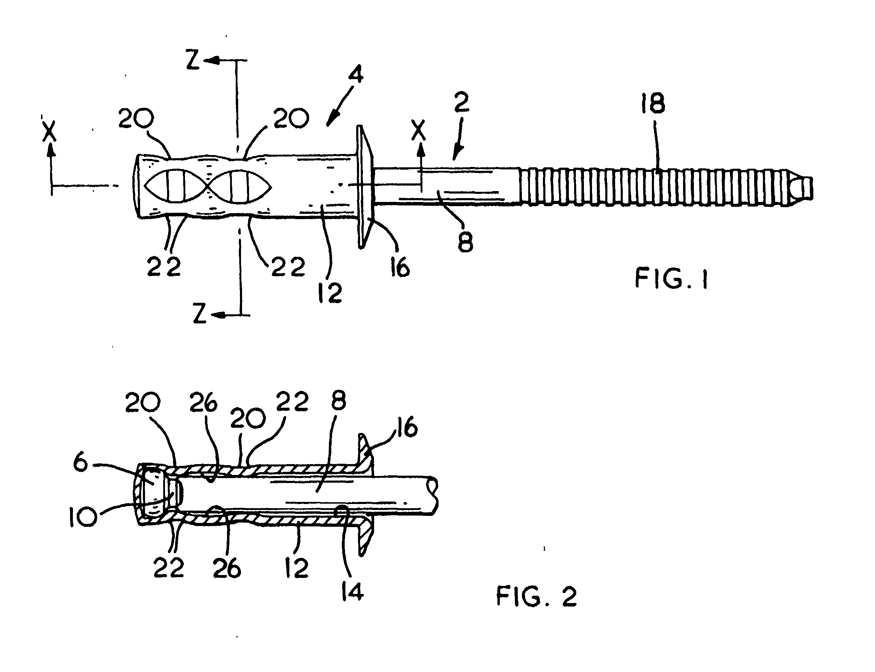

Referring to Figure 1, a blind rivet comprises a mandrel (2) and a rivet body (4). The mandrel (2) comprises a mandrel head (6) attached to one end of a stem (8). The stem (8) comprises a breakneck (10) located adjacent the mandrel head (6). The diameter of the stem (8) is substantially uniform along the length of the stem (8).

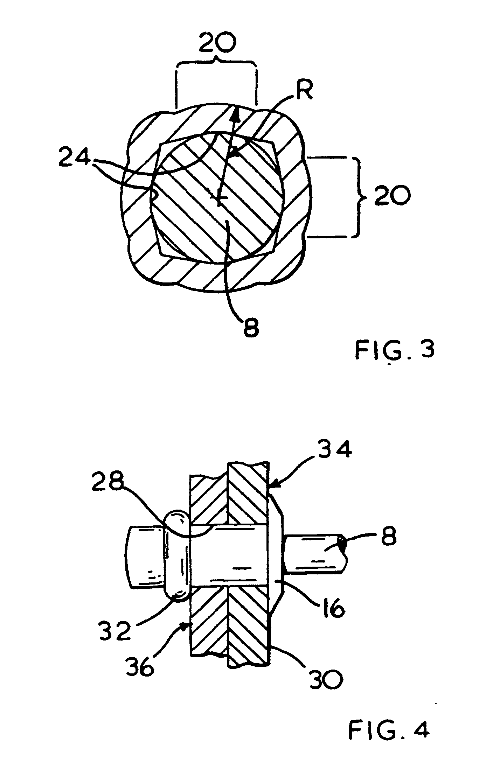

The rivet body (4) comprises a tubular shank (12) having a flange (16) formed at one end of the shank (12). A bore (14) extends through the flange (16) and through a substantial part of the length of the shank (12). The head (6) of the mandrel (2) is located within the shank (12), the outer diameter of the head (6) being larger than the bore (14). The stem (8) of the mandrel (2) extends from the head (6) through the bore (14) and extends from the body (4) of the rivet away from the flange (16). Ridges (18) are formed on part of the exposed end of the stem (8) to assist the rivet setting tool in gripping the stem in order to set the rivet. When the rivet is being manufactured, the shank (12) of the rivet initially has a substantially uniform diameter along its length. The bore (14) of the body (4) of the rivet has a diameter which is substantially equal to that of the stem (8). Two sets of radial impressions (20) are then crimped onto the rivet body (4) at pre-set distances from the flange (16). The radial impressions (20) are best shown in Figure 3. The radial impression (20) is indicated by reference R. By crimping in this manner, the depth of the crimp can be controlled much more accurately leading to a better and more predictable product performance. There are four radial impressions (20) in each series. The crimping results in angled flanks (22) at either side of each radial impression (20) as shown in either Figure 1 or Figure 2. The radial impression (20) forces the shank (12) into a tight assembly with the mandrel at four positions (24) around the stem (8) at the same time inducing local work hardening of the rivet body (4) at these points.

During the crimping operation, some material is displaced inwardly to touch the mandrel but most is displaced longitudinally. The longitudinal displacement between the series of radial impressions results in a slight increase in diameter of the shank (12) between the series of radial impressions resulting in a gap (26) appearing between the stem (8) and the inside of the bore (14). This outward movement encourages the shank (12) to bend at the mid-point between the radial impressions (20).

In order to set the rivet, the shank (12) is placed into and through a bore (28) formed through a workpiece (30) so that the end of the shank (12) remote from the flange (16) protrudes from one side (36) of the workpiece (the blind side) and the flange (16) abuts against the other side (34) (the visible side). The series of radial impressions (20) nearest the flange (16) is located the same distance from the flange (16) as the thickness of the workpiece so that, when the rivet body (4) is located within the workpiece, they are aligned with the surface of the blind side (36).

A rivet setting tool (not shown) of known design is used to set the rivet in the normal manner. The jaws of the rivet setting tool grip the part of the stem (8) which comprises ridges (18). The nose of the rivet setting tool abuts against the flange (16). As the rivet setting tool is operated to set the rivet, the stem (8) is axially pulled away from the flange (16) whilst the flange is held stationary to set the rivet.

In the initial stage of setting, the mandrel head (6) enters the rivet body (4) causing greater swelling in the region between the two series of radial impressions (20). The shank (12) continues to collapse along the rivet body axis until a significant bulge (32) is formed. The work hardened material adjacent the radial impressions (20) controls the collapse of the softer material on either side. The bulge (32) flattens out while continuing to expand radially until the series of radial impressions (20) furthest from the flange (16) has completely collapsed. At this stage, the lower part of the rivet body expands and by so doing fills the bore (28) of the workpiece (30). The amount of linear collapse is controlled by the position of the series of radial impressions (20) nearest the flange (16). The position of the radial impressions (20) nearest the flange (16) determines the minimum thickness of the workpiece (30) which can be fastened using the rivet.

Figure 4 shows the rivet after it has been fully set. At this point, both series of radial impressions (20) have collapsed and thus effectively stopped any further linear collapse of a rivet body. The mandrel breaks at the breakneck, the mandrel head (6) being retained within the body (4).

## Claims

1. A closed-end type blind rivet comprising:
a body having a generally cylindrical shank (12), a radial flange (16) formed at one end of the shank, a bore (14) which extends axially through the flange and through a substantial part of the length of the shank and radial impressions (20) formed around the circumference of the shank at predetermined distances from the flange, wherein the position of the radial impressions (20) nearest the flange (16) determines the thickness of the workpiece (30) which can be fastened using the rivet; and
a mandrel (2) comprising a mandrel head (6) located adjacent an end of the bore remote from the flange, a stem (8) attached to the mandrel head which passes through the length of the bore and extends beyond the flange and which comprises a breakneck (10) located on the stem;
**characterised in that** at least two series of independent radial impressions (20) are formed around the circumference of the shank by a crimping operation in such a manner that angled flanks (22) are formed on each side of said impressions and that the shank bulges outwardly between the series of radial impressions to form a gap (26) between the stem and the wall of the bore in the shank between the series of radial impressions.

2. A blind rivet as claimed in claim 1 wherein there are four radial impressions in each series.

3. A blind rivet as claimed in any one of the previous claims wherein the body of the rivet is made from stainless steel.

4. A method of manufacturing a blind rivet as claimed in any one of claims 1 to 3 comprising the steps of mounting the rivet body onto the mandrel so that the mandrel head is located within the shank so that the stem extends from the head through the bore and flange and away from the body of the rivet, and then crimping at least two series of individual radial impressions onto the outer circumference of the shank at pre-set distances from the flange in such a manner that angled flanks are formed on each side of said impressions and that the shank bulges outwardly between the series of radial impressions to form a gap between the stem and the wall of the bore in the shank between the series of radial impressions.

5. A method of setting a blind rivet as claimed in any one of claims 1 to 3 in a workpiece comprising the step of selecting a rivet such that the series of radial impressions nearest the flange are located at a distance from the flange which is the same as the thickness of the workpiece so that when the rivet is located within the workpiece, the series of radial impressions nearest the flange coincides with the surface of the blind side of the workpiece.

## Patentansprüche

1. Blindniet mit einem geschlossenes Ende, umfassend:
einen Körper mit einem allgemein zylindrischen Nietschaft (12), mit einem an einem Ende des Nietschaftes ausgebildeten radialen Flansch (16), mit einer sich axial durch den Flansch und durch einen wesentlichen Teil der Länge des Nietschaftes erstreckenden Bohrung (14) und mit radialen Vertiefungen (20), die um den Umfang des Nietschaftes in vorbestimmten Abständen zu dem Flansch ausgebildet sind, wobei die Lage der radialen Vertiefungen (20) in dem dem Flansch (16) am nächsten liegenden Bereich die Dicke des Werkstücks (30) bestimmt, das mittels des Niets befestigt werden kann; und
einen Dorn (2) mit einem Dornkopf (6), der benachbart zu einem von dem Flansch abgewandten Ende der Bohrung angeordnet ist, mit einem am Dornkopf befestigten Dornschaft (8), der die Länge der Bohrung durchdringt, sich über den Flansch hinaus erstreckt und eine Sollbruchstelle (10) aufweist;
**dadurch gekennzeichnet, dass** um den Umfang des Nietschaftes wenigstens zwei Reihen unabhängiger radialer Vertiefungen (20) durch Crimpen so ausgebildet sind, dass auf jeder Seite der Vertiefungen abgewinkelte Flanken (22) entstehen, und dass der Nietschaft sich zwischen den Reihen radialer Vertiefungen nach außen wölbt, um so eine Lücke (26) zwischen dem Domschaft und der Bohrungsinnenwand des Nietschaftes zwischen den Reihen radialer Vertiefungen zu bilden.

2. Blindniet nach Anspruch 1, wobei in jeder Reihe vier radiale Vertiefungen vorgesehen sind.

3. Blindniet nach einem der vorhergehenden Ansprüche, wobei der Nietkörper aus rostfreiem Stahl gefertigt ist.

4. Verfahren zur Herstellung eines Blindniets nach einem der Ansprüche 1 bis 3, das folgende Schritte umfasst: Aufsetzen des Nietkörpers auf den Dom, so dass der Dornkopf so im Innern des Nietschaftes angeordnet ist, dass sich der Dornschaft von dem Kopf durch die Bohrung und den Flansch von dem Nietkörper weg erstreckt, und danach Crimpen von wenigstens zwei Reihen einzelner radialer Vertiefungen auf dem Außenumfang des Nietschaftes in vorbestimmten Abständen zu dem Flansch, dergestalt, dass auf jeder Seite der Vertiefungen abgewinkelte Flanken entstehen und der Nietschaft sich zwischen den Reihen radialer Vertiefungen so nach außen wölbt, dass zwischen den Reihen radialer Vertiefungen eine Lücke zwischen dem Dornschaft und der Bohrungsinnenwand des Nietschaftes gebildet wird.

5. Verfahren zum Setzen eines Blindniets nach einem der Ansprüche 1 bis 3 in ein Werkstück, bei dem ein Niet so ausgewählt wird, dass die Reihen radialer Vertiefungen in dem dem Flansch am nächsten liegenden Bereich in einem der Dicke des Werkstücks entsprechenden Abstand zu dem Flansch angeordnet sind, so dass nach Einsetzen des Niets in das Werkstück die Reihe radialer Vertiefungen in dem dem Flansch am nächsten liegenden Bereich mit der Oberfläche der blinden Seite des Werkstücks zusammenfällt.

## Revendications

1. Rivet aveugle de type à extrémité fermée comprenant :
un corps présentant un fût (12) globalement cylindrique, une collerette radiale (16), formée à une extrémité du fût, un alésage (14) qui s'étend axialement le long de la collerette et sur une part importante de la longueur du fût, ainsi que des empreintes radiales (20), formées autour de la circonférence du fût, à des distances prédéterminées en partant de la collerette, dans lequel la position des empreintes radiales (20) les plus proches de la collerette (16) détermine l'épaisseur de la pièce (30) que l'on peut fixer à l'aide du rivet ; et
un mandrin (2) comprenant une tête de mandrin (6), située à proximité d'une extrémité de l'alésage éloignée de la collerette, une tige (8) fixée à la tête de mandrin, qui parcourt la longueur de l'alésage, qui dépasse de la collerette, et qui comprend un collet de séparation (10) situé la tige ;
**caractérisé en ce qu'**au moins deux séries d'empreintes radiales indépendantes (20) entourent la circonférence du fût par le biais d'une opération de serrage, de sorte que des flancs inclinés (22) se forment de part et d'autre desdites empreintes, et que le fût est renflée entre les séries d'empreintes radiales, afin de former un espacement (26) entre la tige et la paroi de l'alésage qui se trouve dans le fût, entre les séries d'empreintes radiales.

2. Rivet aveugle selon la revendication 1, dans lequel se trouvent quatre empreintes radiales dans chaque série.

3. Rivet selon l'une quelconque des revendications précédentes, dans lequel le corps du rivet est constitué d'acier inoxydable.

4. Procédé de fabrication d'un rivet aveugle selon l'une quelconque des revendications 1 à 3, qui comprend les étapes consistant à monter le corps de rivet sur le mandrin afin que la tête de mandrin se trouve dans le fût, si bien que la tige s'étend depuis la tête le long de l'alésage et de la collerette, et sort du corps du rivet, puis à serrer au moins deux séries d'empreintes radiales individuelles à la circonférence externe du fût, à des distances préétablies en partant de la collerette, de façon à former des flancs inclinés de part et d'autre desdites empreintes, et à renfler le fût entre les séries d'empreintes radiales, pour former un espacement entre la tige et la paroi de l'alésage se trouvant entre les séries d'empreintes radiales dans le fût.

5. Procédé de mise en place dans une pièce d'un rivet aveugle selon l'une quelconque des revendications 1 à 3, comprenant l'étape de sélection d'un rivet tel que la série d'empreintes radiales situées au plus proche de la collerette se trouve à une distance de la collerette identique à l'épaisseur de la pièce, ce qui fait que quand on place le rivet dans la pièce, la série d'empreintes radiales la plus proche de la collerette coïncide avec la surface du côté aveugle de la pièce.
